# EUROPEAN PATENT SPECIFICATION

(11) **EP 0 514 811 B1**
(45) Date of publication and mention of the grant of the patent: **09.04.1997**
(21) Application number: 92108349.9
(22) Date of filing: 18.05.1992
(51) Int. Cl.: B42D 15/04, A01C 1/04, B65D 75/28

(54) **Mailing package for seeds**
Versandverpackung für Samen
Emballage postal pour les semences

(30) Priority: 21.05.1991 IT MI910433 U
(43) Date of publication of application: 25.11.1992
(73) Proprietor: Colombo, Alessandro, I-20100 Milano (IT); Garbuglio, Paola, I-20149 Milano (IT)
(72) Inventor: Colombo, Alessandro, I-20100 Milano (IT); Garbuglio, Paola, I-20149 Milano (IT)
(74) Representative: Gervasi, Gemma, Dr.

(56) References cited:
- FR-A- 2 584 983
- US-A- 2 219 403
- US-A- 2 311 742

## Description

The present invention relates to a packing for mailing one or more dehydrated peat pastils containing seeds which may sprout, consisting of corrugated card-board, water-repellent paper and aluminum sheet, suitable for mailing directly said pastils without needing further protections with outer wrappers.

There is more and more gaining ground on the market a system for the preparation of seeds for nurseries or gardening in the form of peat dehydrated pastils also containing suitable fertilizing elements, into which pastils the seed to sprout is introduced. The final user, who is supplied with the thus prepared pastils, introduces them into the growing soil and hydrates them again, causing a swelling of the pastils and the sprouting of the seeds contained in said pastils.

For ornamental purposes, the peat pastils can be hydrated again without needing a further growing soil, allowing all the same the seed sprouting and the possible formation of little plants or flowers generally in a very short period of time.

This system is very useful for the distance dispatch of choice seeds and for ensuring the best sowing conditions to persons who are not skilled in the gardening and in the plant or flower growing either.

The peat dehydrated pastils must, of course, be preserved and mailed in an environment that is possibly free from humidity, in order to avoid a premature and undesired sprouting of the seeds contained in the said pastils.

Considering that single pastils are very often mailed, for promotion, advertising, diversion purposes and the like, it was devised to prepare a packing for a single pastil with a single seed or anyhow for a few seeds, which packing could be used directly for dispatch by mail, by ensuring however the necessary protection conditions of the mailed seed against the humidity.

FR-A-2584983 relates to a postal card for mailing seeds. Said card is made of synthetic material and obtained by thermopressing, injection or extrusion in order to avoid the loss of water. Said card contains a reserve of water in order to maintain the substrates, foam or musk, comprising the seeds, under wet conditions.

The packing, according to the invention, has the shape of a postcard, on whose surface the stamps for the dispatch are directly stuck and the address of the addressee is written, with evident dispatch advantages also from single persons to far acquaintances, like any postcard.

Furthermore, the packing, according to the invention, allows to ensure the highest protection of the mailed seed against the environmental humidity, by ensuring both the maintenance of the germinative properties of the mailed seed and the lack of an undesired sprouting during the transport operations.

An example of the packing's carrying out, according to the invention, will be disclosed hereinafter with particular reference to the enclosed drawings in which:

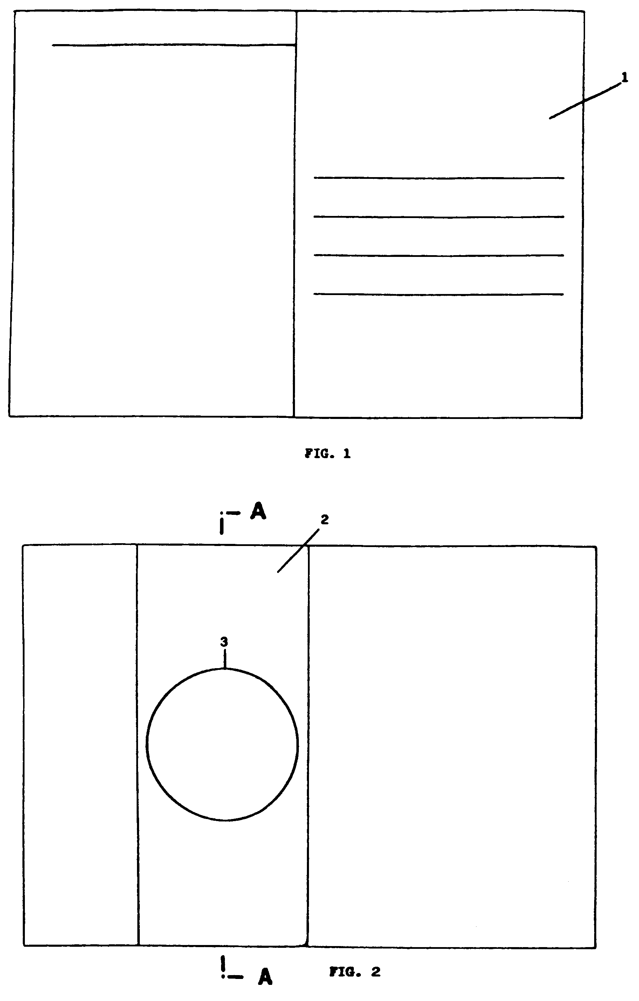

- Figure 1 shows the front part of the packing;
- Figure 2 shows the back part of the packing;

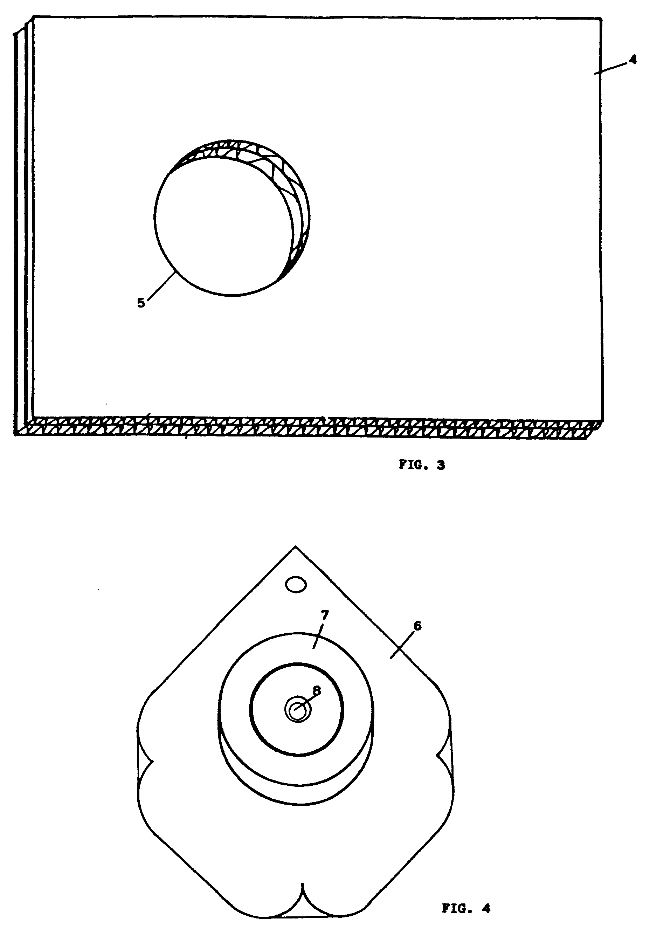

- Figure 3 shows an axonometric view of the packing, free from the front and back surface layers;
- Figure 4 shows the peat pastil to be packed, laid on the protection sheet against the humidity;

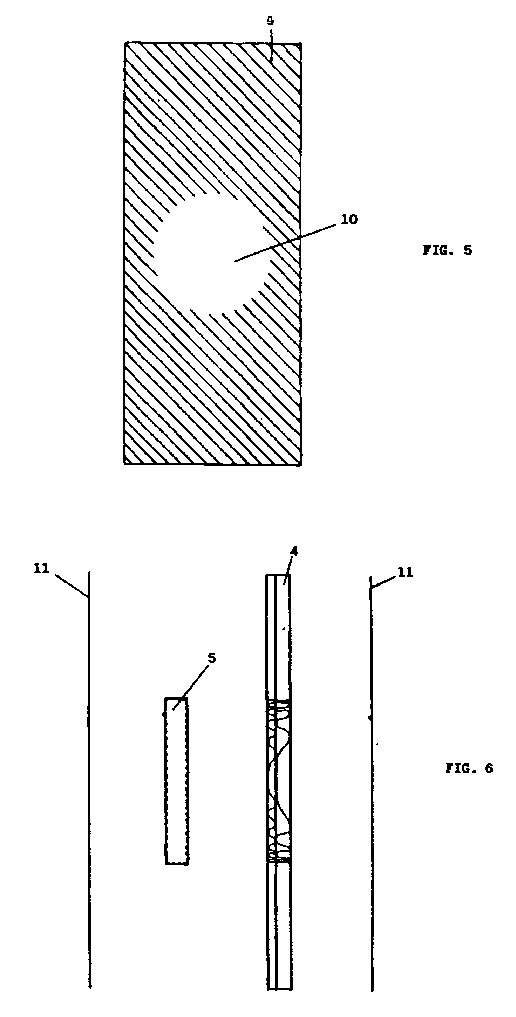

- Figure 5 shows the view of the inner surface of the packing upper layer;
- Figure 6 shows an exploded transverse section of the packing in correspondence of line AA of figure 2.

The packing, according to the invention, is generally obtained by the assembling of a sheet of corrugated card-board 4 with two paper sheets 11 treated in order to be water-repellent. The sheet of corrugated card-board 4, which is a card-board of the two sheet type, can be commonly found on the market and is as thick as the peat pastils to be mailed, is punched in order to obtain housing 5 for one peat dehydrated pastil 7, put on the market under trade-mark Jiffy 7; afterwards the seed to sprout 8 is put into said pastil and the sheet of corrugated card-board is cut out in sizes granted by the regulations concerning the international postcard mailing, generally in the size of 105 x 150 mm.

Of course, the housings to obtain can be more than one, compatibly with the size of the peat pastils to be housed, and the seeds housed inside each peat dehydrated pastil can be more than one as well.

One of the two surfaces of corrugated card-board 4 is joined, by means of an adhesive having high adhesiveness to a sheet of water-repellent paper 11, on whose outer surface 1 the lines are printed to write the address and other possible annotations useful for the mailing, such as the type of postage to be used or where to stick the stamps.

Peat pastil 7 containing seed 8 is wrapped up in a thin aluminum sheet 6 ensuring the protection of seed 8 against the humidity of the surrounding environment. Peat pastil 7, after having been shut up in its aluminum wrapper, is introduced into housing 5 obtained in corrugated card-board 4 and fixed by means of an adhesive having high adhesiveness to the inner surface of the paper, whose outer part 1 is used for the mail directions and postage.

According to a typical embodiment of the invention, the closing of the other side of housing space 5, after the introduction of peat pastil 7, is carried out by sticking, by means of an adhesive having high adhesiveness, a second sheet of paper 11, said sheet having a circular opening with a diameter equal to or slightly smaller than the one of the peat pastil in correspondence of said housing space 5. Separately, a strip 2 of water-repellent paper slightly wider than the diameter of the peat pastil is prepared. This paper strip 2 is stuck on sheet 11 by means of an adhesive having low adhesiveness 9 with the exception of part 10, coinciding with the circular opening made on said sheet, which, on the contrary, is stuck directly on outer aluminum wrapper 6 of peat pastil 7 by means of an adhesive having high adhesiveness.

According to another embodiment of the invention, the closing of the other side of housing space 5, after the introduction of peat pastil 7, is carried out by sticking a second sheet of water- repellent paper 11 on the other surface of corrugated card-board 4; said sticking is carried out by means of an adhesive having high adhesiveness along the whole surface of the paper sheet, with the exception of a zone having the same size and the same distribution of adhesives as mentioned above, for strip 2, in such a way as to adhere highly to aluminum outer wrapper 6 of peat pastil 7.

The packing opening is in fact carried out by lifting paper strip 2 (or the equivalent zone of sheet 11 ), which during the lifting operation pulls up aluminum wrapper 6 protecting peat pastil 7, so that said pastil is allowed to hydrate again and to sprout contained seed 8.

In a preferred embodiment of the invention, aluminum outer wrapper 6 of peat pastil 7 is carried out by using two separated aluminum sheets, one for the lower and side part of peat pastil 7 and the other for the upper part of same, coinciding with the zone to adhere to closing strip 2 by means of an adhesive having high adhesiveness. This type of outer wrapper is often used in the alimentary field, for instance for cream-cheeses, and therefore it allows to utilize customary machines to prepare the peat pastils useful for carrying out the invention.

The position of peat pastil 7 in the wrapper can be indicated by means of a suitable stamping 3 on the outer surface of closing strip 2 for ornamental or advertising purposes. On the outer surface of the packing also one generally prints the directions, how to use the pastil contained in the packing and how to open the same, as well as any other type of message one wants to send to the addressee.

## Claims

1. A packing for mailing directly seeds and having the shape of a postcard, on whose surface the stamps for the dispatch are directly stuck and the address of the addressee is written,
characterized by the fact of comprising one or more dehydrated peat pastils (7) containing one or more seeds (8) which may sprout, and consisting of corrugated card-board (4), in which a housing (5) is punched for each peat pastil (7), water-repellent paper (11) at both sides of said packing, and aluminum sheet (6), which wraps up said peat pastil (7).

2. A packing according to claim 1, characterized in that the two greatest opposite surfaces of corrugated card-board (4) are joined to two sheets of water repellent paper (11) by means of an adhesive having high adhesiveness, said card-board being of the two sheet type and as thick as the peat pastils to mail.

3. A packing according to claim 1, characterized in that, peat pastil (7) containing seed (8) is wrapped in a thin aluminum sheet (6) before being introduced into housing (5), obtained in corrugated card-board (4) and fixed, by means of an adhesive having high adhesiveness, to the inner surface of the paper, used in its outer part (1) for the mail directions and postage.

4. A packing according to claim 1, characterized in that the closing of the other side of housing space (5), after introduction of peat pastil (7), is carried out by sticking, by means of an adhesive having high adhesiveness, a second paper sheet (11), said sheet having a circular opening having a diameter equal to or slightly smaller than the one of the peat pastil coinciding with said housing space (5); afterwards a strip (2) of water-repellent paper, being slightly wider than the diameter of the peat pastil, is stuck on sheet (11) by means of an adhesive having low adhesiveness (9), with the exception of part (10), coinciding with the circular opening made on said sheet which, on the contrary, is stuck directly on outer aluminum wrapper (6) of peat pastil (7) by means of an adhesive having high adhesiveness.

5. A packing according to claim 1, characterized in that the closing of the other side of housing space (5), after introduction of peat pastil (7), is carried out by sticking, by means of an adhesive having high adhesiveness, a second paper sheet (11) along the whole surface of the paper sheet, with the exception of a zone being slightly wider than the diameter of the peat pastil, which zone is stuck to card-board (4) by means of an adhesive having low adhesiveness with the exception of a part (10), which, on the contrary, is stuck directly to outer aluminum wrapper (6) of peat pastil (7) by means of an adhesive having high adhesiveness.

6. A packing according to claim 1, characterized in that outer aluminum wrapper (6) of peat pastil (7) is carried out by using two separated aluminum sheets, one for the lower and side part of peat pastil (7) and the other for the upper part of the same.

7. A packing according to claim 4, characterized in that the opening of the packing is carried out by lifting paper strip (2), which, during the lifting operation, pulls up aluminum wrapper (6) protecting peat pastil (7).

8. A packing according to claim 5, characterized in that the opening of the packing is carried out by lifting said zone of the paper sheet stuck to the card-board by means of an adhesive having low adhesiveness, which, during the lifting operation, pulls up aluminum wrapper (6) protecting peat pastil (7).

## Patentansprüche

1. Verpackung zum Direktversand von Samen, die die Form einer Postkarte aufweist und auf deren Oberfläche die Briefmarken zum Versand direkt aufgeklebt und die Adresse des Adressaten aufgeschrieben werden kann,
dadurch **gekennzeichnet**, daß
die Verpackung eine oder mehr dehydrierte Torfpastillen (7) umfaßt, die einen oder mehrere Samen (8) aufweist, die sprießen können und daß sie aus Wellpappe (4), in die ein Gehäuse (5) für jede Torfpastille (7) gestanzt ist, aus wasserabweisendem Papier (11) auf beiden Seiten der Verpackung und aus Aluminiumfolie (6), die die Torfpastille (7) umhüllt, besteht.

2. Verpackung nach Anspruch 1, dadurch gekennzeichnet, daß die zwei größten gegenüberliegenden Oberflächen der Wellpappe (4) durch zwei Blätter wasserabweisendes Papier (11) mittels eines Klebers mit hoher Klebebindung verbunden sind, wobei die Pappe eine 2-lagigen Typs und so dick wie die zu versendenden Torpastillen ist.

3. Verpackung nach Anspruch 1, dadurch gekennzeichnet, daß die Samen (8) beinhaltende Torfpastille (7) in eine dünne Aluminiumfolie (6) eingewickelt ist, bevor sie in das Gehäuse (5), was in der Wellpappe (4) vorgesehen ist eingeführt ist und mittels eines Klebers mit hoher Klebebindung an die innere Oberfläche des an seinem äußeren Teil (1) für die Postanschrift und das Porto benutzten Papiers befestigt ist.

4. Verpackung nach Anspruch 1, dadurch gekennzeichnet, daß nach Einführen der Torfpastille (7) das Verschließen der anderen Seite des Gehäuseraums (5) durch das Kleben eines zweiten Blattes Papier (11) mittels eines Klebers mit hoher Klebebindung durchgeführt ist, wobei das zweite Blatt Papier (11) eine kreisförmige Öffnung mit einem Durchmesser aufweist, der gleich dem oder geringfügig kleiner ist als der der Torfpastille (5), die mit dem Gehäuseraum (5) übereinstimmt; danach ist ein Streifen (2) wasserabweisendes Papier, der geringfügig breiter als der Durchmesser der Torfpastille ist, mittels eines Klebers mit geringer Klebebindung (9) auf das Blatt wasserabweisendes Papier (11) geklebt, mit Ausnahme eines Teils (10), der mit der in dem Blatt vorgesehenen, kreisförmigen Öffnung übereinstimmt, der dahingegen direkt auf die äußere Aluminiumumhüllung (6) der Torfpastille (7) mittels eines Klebers mit hoher Klebebindung geklebt ist.

5. Verpackung nach Anspruch 1, dadurch gekennzeichnet, daß nach Einführen der Torfpastille (7) das Verschließen der anderen Seite des Gehäuseraums (5) durch das Kleben eines zweiten Blattes Papier (11) mittels eines Klebers mit hoher Klebebindung entlang der ganzen Oberfläche des Blattes Papier durchgeführt ist, mit Ausnahme eines Bereiches, der geringfügig breiter als der Durchmesser der Torfpastille ist, welcher Bereich auf die Pappe (4) mittels eines Klebers mit geringer Klebebindung geklebt ist, mit Ausnahme eines Teils (10), der dahingegen direkt auf die äußere Aluminiumumhüllung (6) der Torfpastille (7) mittels eines Klebers mit hoher Klebebindung geklebt ist.

6. Verpackung nach Anspruch 1, dadurch gekennzeichnet, daß die äußere Aluminiumumhüllung (6) der Torfpastille (7) durch das Verwenden zweier getrennter Aluminiumfolien bereitgestellt ist, eine für den unteren und seitlichen Teil der Torfpastille (7) und der andere für den oberen Teil derselben.

7. Verpackung nach Anspruch 4, dadurch gekennzeichnet, daß das Öffnen der Umhüllung durch das Anheben des Papierstreifens (2) durchgeführt ist, der während des Anhebevorgangs die die Torfpastille (7) schützende Aluminiumumhüllung (6) hochzieht.

8. Verpackung nach Anspruch 5, dadurch gekennzeichnet, daß das Öffnen der Umhüllung durch das Anheben des auf die Pappe mittels eines Klebers mit geringer Klebebindung geklebten Bereiches des Blattes Papiers durchgeführt ist, der während des Anhebevorgangs die die Torfpastille (7) schützende Aluminiumumhüllung (6) hochzieht.

## Revendications

1. Emballage destiné à expédier directement des graines et ayant la forme d'une carte postale, sur la surface de laquelle les timbres pour la distribution sont directement collés et l'adresse du destinataire est écrite,
caractérisé par le fait de comporter une ou plusieurs pastilles de tourbe déshydratée (7) contenant une ou plusieurs graines (8) qui peuvent germer, et composé de carton ondulé (4), dans lequel un logement (5) est poinçonné pour chaque pastille de tourbe (7), de papier hydrophobe (11) des deux côtés dudit emballage, et d'une feuille d'aluminium (6) qui enveloppe ladite pastille de tourbe (7).

2. Emballage selon la revendication 1, caractérisé en ce que les deux plus grandes surfaces opposées du carton ondulé (4) sont reliées aux deux feuilles de papier hydrophobe (11) au moyen d'un adhésif ayant une force d'adhésion élevée, ledit carton étant du type à deux feuilles et aussi épais que les pastilles de tourbe à expédier.

3. Emballage selon la revendication 1, caractérisé en ce que la pastille de tourbe (7) contenant des graines (8) est enveloppée dans une feuille mince d'aluminium (6) avant d'être introduite dans ledit logement (5), réalisé dans du carton ondulé (4), et fixée, au moyen d'un adhésif ayant une force d'adhésion élevée, sur la surface interne du papier, utilisé dans sa partie extérieure (1) pour l'adressage et l'affranchissement.

4. Emballage selon la revendication 1, caractérisé en ce que la fermeture de l'autre côté de l'espace de logement (5), après introduction de la pastille de tourbe (7), est réalisée par collage, au moyen d'un adhésif ayant une force d'adhésion élevée, d'une deuxième feuille de papier (11), ladite feuille ayant une ouverture circulaire ayant un diamètre égal ou légèrement supérieur à celui d'une pastille de tourbe coïncidant avec ledit espace de logement (5) ; à la suite de quoi une bande (2) de papier hydrophobe, qui est légèrement plus large que le diamètre de la pastille de tourbe, est collée sur la feuille (11) au moyen d'un adhésif ayant une faible force d'adhésion (9), à l'exception d'une partie (10), coïncidant avec l'ouverture circulaire réalisée sur ladite feuille qui, au contraire, est collée directement sur l'enveloppe extérieure en aluminium (6) de la pastille de tourbe (7) au moyen d'un adhésif ayant une force d'adhésion élevée.

5. Emballage selon la revendication 1, caractérisé en ce que la fermeture de l'autre côté de l'espace de logement (5), après introduction de la pastille de tourbe (7), est réalisée par collage, au moyen d'un adhésif ayant une force d'adhésion élevée, d'une deuxième feuille de papier (11) sur toute la surface de la feuille de papier, à l'exception d'une zone qui est légèrement plus large que le diamètre de la pastille de tourbe, cette zone étant collée sur le carton (4) au moyen d'un adhésif ayant une faible force d'adhésion à l'exception d'une partie (10) qui, au contraire, est collée directement sur l'enveloppe extérieure en aluminium (6) de la pastille de tourbe (7) au moyen d'un adhésif ayant une d'adhésion élevée.

6. Emballage selon la revendication 1, caractérisé en ce que l'enveloppe extérieure en aluminium (6) de la pastille de tourbe (7) est réalisée en utilisant deux feuilles d'aluminium séparées, une pour la partie inférieure et latérale de la pastille de tourbe (7) et l'autre pour la partie supérieure de celle-ci.

7. Emballage la revendication 4, caractérisé en ce que l'ouverture de l'emballage est réalisée en soulevant une bande de papier (2), qui, pendant l'opération de soulèvement, tire l'enveloppe d'aluminium (6) protégeant la pastille de tourbe (7).

8. Emballage selon la revendication 5, caractérisé en ce que l'ouverture de l'emballage est réalisée en soulevant ladite zone de la feuille de papier collée sur le carton au moyen d'un adhésif ayant une faible force d'adhésion, qui, pendant l'opération de soulèvement, tire l'enveloppe d'aluminium (6) protégeant la pastille de tourbe (7).
